# EUROPÄISCHE PATENTSCHRIFT

(11) **EP 1 807 638 B1**
(45) Veröffentlichungstag und Bekanntmachung des Hinweises auf die Patenterteilung: **12.03.2008**
(21) Anmeldenummer: 05785194.1
(22) Anmeldetag: 15.09.2005
(51) Int. Cl.: F16D 55/226

(54) **SCHEIBENBREMSE, INSBESONDERE FÜR EIN NUTZFAHRZEUG**
DISC BRAKE, IN PARTICULAR FOR A COMMERCIAL VEHICLE
FREIN A DISQUE, EN PARTICULIER POUR UN VEHICULE UTILITAIRE

(30) Priorität: 26.10.2004 DE 102004052148; 06.04.2005 DE 102005015774
(43) Veröffentlichungstag der Anmeldung: 18.07.2007
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2005/009924
(87) Internationale Veröffentlichungsnummer: WO 2006/045376

(56) Entgegenhaltungen:
- GB-A- 1 355 959
- US-A- 3 838 753
- US-A- 4 136 761
- US-A- 4 440 267

## Beschreibung

Die vorliegende Erfindung betrifft eine Scheibenbremse, insbesondere für ein Nutzfahrzeug, entsprechend dem Oberbegriff des Anspruchs 1. Ein solche Scheibenbremse ist aus US-4 136 761 bekannt.

Derartige, beispielsweise pneumatisch betätigte Scheibenbremsen, werden vorzugsweise als Schiebesattelbremsen eingesetzt, da sie unter anderem konstruktionsbedingt einen geringen Raum beanspruchen. Dabei ist der Bremssattel axial verschiebbar an dem Bremsträger gelagert.

An die Sattellagerung werden dabei unterschiedliche Anforderungen gestellt. So soll der Bremssattel möglichst reibungsarm und genau auf dem Bremsträger geführt werden. Weiter muss die Sattellagerung die auch bei hoher Rüttelbeanspruchung auftretenden Massenkräfte problemlos aufnehmen können, ebenso Querkräfte, die beim Bremsen entstehen.

Um diesen Anforderungen gerecht zu werden, ist eine Mindestführungslänge der Sattellagerung erforderlich, so dass beim Verschieben des Bremssattels eine Verkantung ausgeschlossen ist.

Der zur Verfügung stehende Bauraum ist jedoch sehr begrenzt, insbesondere bei Fahrzeugen mit Einzelradaufhängung. Bekannt sind Schiebe- oder Schwimmsättel, bei denen der Bremssattel zur Verlängerung des Führungsweges entweder nur zuspannseitig oder sowohl zuspann- als auch reaktionsseitig mit Führungslagern in Form von Führungsholmen verschiebbar am Bremssattel gehalten sind.

Diese Bauformen sind hinsichtlich des Bauraumbedarfes derzeit noch nicht optimal. So ragen bei letztgenannter Variante die Führungsholme auf beiden Seiten über den Bremsträger hinaus, was zu einem entsprechenden Bauraumbedarf führt.

Darüber hinaus sind, um eine dauerhafte Funktionssicherheit der Führungsholme zu gewährleisten, diese endseitig mit Faltenbälgen aus Silikongummi abgedichtet. Jedoch sind diese Faltenbälge durch thermische und mechanische Belastungen funktionsgefährdet, so dass es aufgrund von betriebsbedingten Undichtigkeiten zu Funktionsstörungen der Scheibenbremse kommen kann.

Des weiteren ist der konstruktive Aufwand gerade hinsichtlich der notwendigen Abdichtungen erheblich mit den sich daraus ergebenden Kosten. Auch die genannten möglichen Betriebsstörungen führen zu durchaus nennenswerten Kosten sowohl hinsichtlich notwendiger Reparaturen wie auch hinsichtlich der zur Reparatur erforderlichen Stillstandzeit des Nutzfahrzeuges.

Der vorliegenden Erfindung liegt die Aufgabe zugrunde, eine Scheibenbremse der gattungsgemäßen Art so weiter zu entwickeln, dass ihr Bauraumbedarf verringert wird und dass die Führung insgesamt einfacher und kostengünstiger herstellbar und weitgehend unempfindlich gegen mechanische und thermische Belastungen ist.

Diese Aufgabe wird durch eine Scheibenbremse gelöst, welche die Merkmale des Anspruchs 1 aufweist.

Danach sind zur reaktionsseitigen Führung des Bremssattels direkt am Bremsträger sich in Verschieberrichtung erstreckende Führungsbahnen vorzugsweise einstückig an diesem ausgebildet, an denen korrespondierende Führungsflächen des Bremssattels oder daran angeschlossener Teile - insbesondere eine Führungsplatte - anliegen.

Durch diese konstruktive Ausbildung fungiert der Bremsträger selbst als Führungslager, an dem der Bremssattel oder daran angeschlossene Teile direkt axial verschiebbar gelagert ist. Auf hervorstehende, separate Führungsholme kann somit verzichtet werden.

Hieraus ergeben sich eine ganze Reihe von Vorteilen, zu denen zunächst einmal die Möglichkeit einer Minimierung des erforderlichen Bauraumes zu zählen ist.

Dies gilt einerseits gegenüber den bisherigen Lösungen mit beidseitigen Lagern zwischen Sattel und Träger aber auch für Ausführungsformen mit nur reaktionsseitige Schiebelagern, da diese kürzer auslegbar sind und durch die erfindungsgemäße reaktionsseitige axial kurze Führung zwischen Sattel und Lager ersetzt werden, was in verschiedenen Einbausituationen vorteilhaft ist.

Darüber hinaus wird durch den Fortfall bislang notwendiger Dichtelemente wie der erwähnten Faltenbälge eine Verbesserung der Betriebssicherheit erreicht, neben der Verringerung von Reparatur- und Folgekosten, wobei sich die Erfindung vor allem auch dadurch auszeichnet, dass sie einfach und kostengünstig realisierbar ist und eine äußerst robuste, dem üblicherweise rauen Betrieb uneingeschränkt gewachsene Bauweise ermöglicht.

Die Reduzierung der Herstellungskosten ist vor allem deshalb bemerkenswert, weil es sich bei solchen Scheibenbremsen um Großserienteile handelt, bei denen Kostenreduzierungen prinzipiell einen hohen Stellenwert besitzen.

Die Führungsbahnen des Bremsträgers sind nach einer vorteilhaften Weiterbildung der Erfindung, so ausgebildet, dass der Bremssattel in Umfangsrichtung der Bremsscheibe, also entsprechend dem Bremsmomentverlauf, formschlüssig gehalten wird.

An Stelle des Bremssattels direkt kann auch eine daran befestigte Führungsplatte mit Führungsflächen versehen sein oder der reaktionsseitige Bremsbelag, der mit dem Bremssattel eine Baueinheit bildet.

Die Verwendung einer Führungsplatte, bei der die Führungsflächen in einem äußeren Teilbereich vorgesehen sind, während die Führungsbahnen des Bremsträgers innenseitig angeordnet sind, hat den Vorteil, dass sie in ihrer an die Führungsbahnen des Bremsträgers angepassten Formgebung einfacherer und leichter zu gestalten ist. Die Verbindung der Führungsplatte mit dem Bremssattel kann beispielsweise durch Verschrauben erfolgen.

Die Führungsplatte, an welcher der Bremsbelag befestigt ist, ist im Bremsträger offen gelagert. Beim Fahrbetrieb aufgewirbelte Fremdkörper können somit leicht aus den Führungsbahnen bzw. den Führungsflächen entweichen.

Durch die nahezu spielfreie, zumindest jedoch spielarme Lagerung der Führungsplatte im Bremsträger wird der Bremssattel auf den Bremsbelag wirkenden Querkräften entlastet, so dass ein Ausdrehen des Bremsbelages nicht möglich ist. Dabei ist der Bremsbelag bevorzugt formschlüssig mit der Führungsplatte verbunden, wodurch die Belagquerkräfte in die Führungsplatte und von dort in den Bremsträger eingeleitet werden.

Da der Bremssattel hierdurch nur noch Zuspannkräfte übertragen muss, ist eine geringere Dimensionierung und eine daraus sich ergebende Gewichtseinsparung möglich, wie sie gefordert wird.

Durch die günstige Aufteilung der Bremssattel-Lagerkräfte kann im Vergleich zu einer einsseitigen Sattellagerung die zuspannseitige Lagerung bzw. Führung erheblich kleiner dimensioniert werden. Hierdurch ergeben sich ebenfalls Gewichteinsparungen aber auch durchaus Einbauvorteile.

Bei Einsatz einer Führungsplatte erfolgt die Druckkraftverteilung vom Bremssattel auf den Bremsbelag über die Führungsplatte. Da diese eine hohe Biegesteifigkeit aufweist, kann ein Belagträgerblech des Bremsbelages, auf das ein Reibbelag aufgebracht ist, sehr dünn ausgebildet sein.

Aufgrund der Führung des Bremssattels bzw. des daran angeschlossenen Teiles im Bremsträger und im Falle des Einsatzes einer Führungsplatte der formschlüssigen und spielfreien Verbindung des Bremsbelages damit, sind Klappergeräusche, verursacht durch ein "Springen des Bremsbelages" zumindest weitgehend ausgeschlossen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäßen Scheibenbremse in einer Vorderansicht
- Figur 2: den Teilausschnitt in einer teilweise geschnittenen Draufsicht

In den Figuren ist ein Teilausschnitt einer Scheibenbremse, insbesondere für ein Nutzfahrzeug dargestellt, mit einem eine Bremsscheibe 8 im oberen Umfangsbereich übergreifenden bzw. einfassenden Bremssattel 2, wobei die Bremsscheibe 8 an einem nicht dargestellten Fahrzeugrad oder einer Fahrzeugachse befestigt ist.

Gleichfalls nicht dargestellt ist eine Zuspanneinrichtung, mit der bei einer Bremsung der zuspannseitige Bremsbelag 4 gegen die Bremsscheibe 8 drückbar ist. Im Ausführungsbeispiel wird lediglich der reaktionsseitige Bremsbelag 4 gezeigt.

Dieser Bremsbelag 4 wird vom Bremssattel 2 getragen, wozu mit diesem eine Führungsplatte 3 durch Schrauben 5 verbunden ist, an welcher der Bremsbelag 4 formschlüssig befestigt ist.

Dabei weist die Führungsplatte 3 auf ihrer dem Bremssattel 2 zugewandten Seite Zapfen 12 auf, die in entsprechende Ausnehmungen des Bremssattels 2 ragen, wobei die Zapfen 12 konzentrisch zu den Gewindebohrungen der Führungsplatte 3 angeordnet sind, in welche die Schrauben 5 eingedreht sind.

Zum formschlüssigen Verbinden des Bremsbelages 4 sind Formschlussverbindungen 11 in einer Belagträgerplatte 7 des Bremsbelages 4 und in der Führungsplatte 3 vorgesehen. Diese Formschlussverbindungen 11 können durch miteinander korrespondierende Erhebungen und Vertiefungen gebildet sein und dienen der Bremsmomentaufnahme bei Bremsungen, bei der ein fest mit der Belagträgerplatte 7 verbundener Reibbelag 6 des Bremsbelages 4 gegen die Bremsscheibe 8 gepresst wird.

Die Führungsplatte 3 ist in einem Teilbereich ihrer Konturfläche als Führungsflächen 10 ausgebildet, die an Führungsbahnen 9 an einem ortsfesten Bremsträger 1 anliegen und somit in dem Bremsträger 1 axial in Richtung der Bremsscheibe 8 verschiebbar gelagert ist.

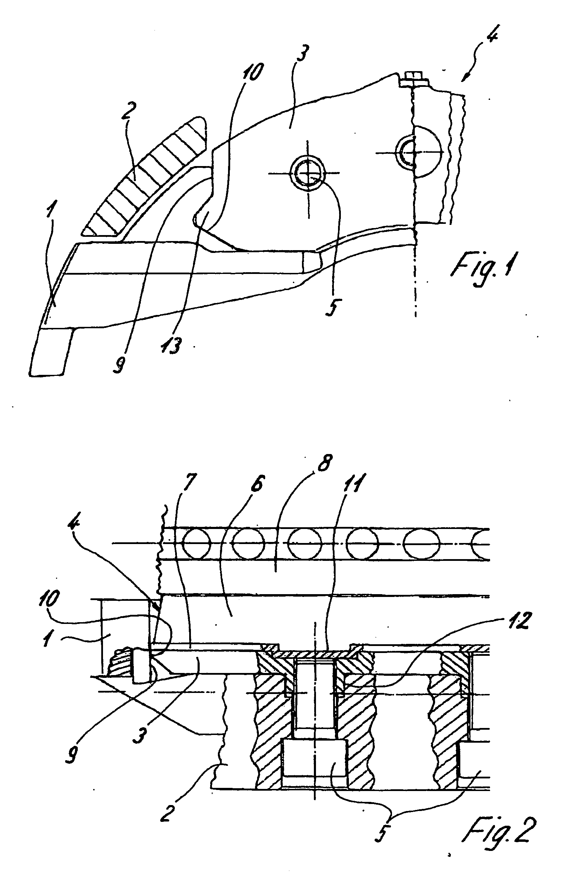

Wie insbesondere die Figur 1 sehr deutlich zeigt, sind die Führungsbahnen 9 in ihrem Konturenverlauf in einer bestimmten geometrischen Form ausgebildet, durch die eine an die Führungsplatte 3 angeformte Nase 13 derart in den Bremsträger 1 eingreifen kann, dass sich in Umfangsrichtung der Bremsscheibe 8 ein Formschluss ergibt, wodurch beim Bremsen auftretende Bremsmomente sicher auf den Bremsträger 1 übertragen werden. Dabei sind die Führungsbahnen 9 auf einer innenseitigen Kontur des Bremsträgers 1 und die Führungsflächen 10 auf einer außenseitigen Kontur der Führungsplatte 3 vorgesehen.

Die Führungsflächen 10 können statt an einer separaten Führungsplatte 3 auch unmittelbar am Bremssattel 2 vorgesehen sein oder am Bremsbelag 4, wobei dieser dann direkt an dem Bremssattel 2 befestigt ist.

In jedem Fall erfolgt die Führung zur axialen Verschiebung des Bremssattels 2 innerhalb des Bremsträgers 1.

### Bezugszeichenliste

1 Bremsträger
2 Bremssattel
3 Führungsplatte
4 Bremsbelag
5 Schraube
6 Reibbelag
7 Belagträger
8 Bremsscheibe
9 Führungsbahn
10 Führungsfläche
11 Formschlussverbindung 12 Zapfen
13 Nase

## Patentansprüche

1. Scheibenbremse, insbesondere für ein Nutzfahrzeug, mit einem eine Bremsscheibe (8) übergreifenden Bremssattel (2), einer im Bremssattel (2) angeordneten Zuspanneinrichtung, mit der bei einer Bremsung ein zuspannseitiger erster Bremsbelag gegen die Bremsscheibe (8) drückbar ist, wobei der Bremssattel (2) axial verschiebbar geführt an einem ortsfesten Bremsträger (1) gehalten ist und durch Verschieben des Bremssattels (2) der reaktionsseitige Bremsbelag (4) ebenfalls zugespannt wird, und wobei zur reaktionsseitigen Führung des Bremssattels (2) direkt am Bremsträger (1) sich in Verschieberrichtung erstreckende Führungsbahnen (9) ausgebildet sind, an denen Führungsflächen (10) des Bremssattels (2) oder daran angeschlossener Teile anliegen, **dadurch gekennzeichnet, dass** die Führungsflächen (10) an einer am Bremssattel (2) befestigten, den Bremsbelag (4) tragenden Führungsplatte (3) oder am Bremsbelag (4) vorgesehen sind.

2. Scheibenbremse nach Anspruch 1, **dadurch gekennzeichnet, dass** die Führungsbahnen (9) an einer innenseitigen Kontur des Bremsträgers (1) und die Führungsflächen (10) an einer außenseitigen Kontur der Führungsplatte (3) bzw. des Bremsbelages (4) angeordnet sind, wobei die Führungsbahnen (9) und die Führungsflächen (10) in Umfangsrichtung der Bremsscheibe (8) formschlüssig miteinander korrespondieren.

3. Scheibenbremse nach Anspruch 1 oder 2, **dadurch gekennzeichnet, dass** die Führungsplatte (3) mit dem Bremssattel (2) verschraubt ist.

4. Scheibenbremse nach einem der vorhergehenden Ansprüche, **dadurch gekennzeichnet, dass** der Bremsbelag (4) formschlüssig mit der Führungsplatte (3) verbunden ist.

5. Scheibenbremse nach einem der vorhergehenden Ansprüche, **dadurch gekennzeichnet, dass** eine Belagträgerplatte (7) des Bremsbelages (4) mit Formschlussmitteln (11) der Führungsplatte (3) oder des Bremssattels (2) zur Verschiebesicherung in Umfangsrichtung der Bremsscheibe (8) korrespondieren.

## Claims

1. Disc brake, in particular for a commercial vehicle, with a brake calliper (2) encompassing a brake disk (8), with an application device located in the brake calliper (2), by means of which an application-side first brake pad can be pressed against the brake disc (8) in a braking process, wherein the brake calliper (2) is guided for axial movement on a stationary adapter (1) and the reaction-side brake pad (4) is likewise applied by the displacement of the brake calliper (2), and wherein, for the reaction-side guidance of the brake calliper (2), guideways (9) extending in the direction of displacement, against which bear guide surfaces (10) of the brake calliper (2) or of components joined thereto, are provided directly on the adapter (1), **characterised in that** the guide surfaces (10) are provided on a guide plate (3) mounted on the brake calliper (2) and supporting the brake pad (4) or on the brake pad (4).

2. Disc brake according to claim 1, **characterised in that** the guideways (9) are located at an inside contour of the adapter (1) and the guide surfaces (10) are located on a outside contour of the guide plate (3) of the brake pad (4), wherein the guideways (9) and the guide surfaces (10) correspond positively in the circumferential direction of the brake disc (8).

3. Disc brake according to claim 1 or 2, **characterised in that** the guide plate (3) is bolted to the brake calliper (2).

4. Disc brake according to any of the preceding claims, **characterised in that** the brake pad (4) is positively joined to the guide plate (3).

5. Disc brake according to any of the preceding claims, **characterised in that** a pad supporting plate (7) of the brake pad (4) corresponds with engaging means (11) of the guide plate (3) or the brake calliper (2) to prevent displacement in the circumferential direction of the brake disc (8).

## Revendications

1. Frein à disque, en particulier pour un véhicule utilitaire, comprenant un étrier de frein (2) chevauchant un disque de frein (8), un dispositif de serrage de frein, qui est disposé dans ledit étrier de frein (2) et servant à presser une première garniture de frein du côté de serrage au cours d'une action de serrage de frein, dans lequel ledit étrier de frein (2) est tenu à un support de frein (1) stationnaire de manière guidée pour un déplacement axial, et dans lequel ladite garniture de frein (4) du côté de réaction est également serrée par déplacement dudit étrier de frein (2), et dans lequel des voies de guidage (9) sont formées directement audit étrier de frein (1), qui s'étendent le long de la direction de déplacement, pour le guidage dudit étrier de frein (2) du côté de réaction, auxquelles voies s'appliquent des surfaces de guidage (10) dudit étrier de frein (2) ou des parties y raccordées, **caractérisé en ce que** lesdites surfaces de guidage (10) sont formées à un plaque de guidage (3) monté audit étrier de frein (2) et appuyant ladite garniture de frein (2) ou à ladite garniture de frein (4).

2. Frein à disque selon la revendication 1, **caractérisé en ce que** lesdites voies de guidage (9) sont disposées à un contour dudit support de frein (3) du côté intérieur et lesdites surfaces de guidage (10) sont disposées à un contour dudit disque de guidage (3) du côté extérieur ou respectivement de ladite garniture de frein (4), auxdites voies de guidage (9) et auxdites surfaces de guidage (10) correspondant l'une à l'autre par engagement positif le long de la direction circonférentielle dudit disque de frein (8).

3. Frein à disque selon la revendication 1 ou 2, **caractérisé en ce que** ledit plaque de guidage (3) est vissé audit étrier de frein (2).

4. Frein à disque selon une quelconque des revendications précédentes, **caractérisé en ce que** ladite garniture de frein (4) est raccordé audit plaque de guidage (3) par engagement positif.

5. Frein à disque selon une quelconque des revendications précédentes, **caractérisé en ce qu'**un disque de support de garniture (7) de ladite garniture de frein (4) se trouve en correspondance avec des moyens d'engagement positif (11) dudit plaque de guidage (3) ou dudit étrier de frein (2) pour la sécurité contre un déplacement le long de la direction circonférentielle dudit disque de frein (8).
